# EUROPEAN PATENT APPLICATION

(11) **EP 4 517 921 A1**
(43) Date of publication of application: **05.03.2025**
(21) Application number: 24177385.2
(22) Date of filing: 22.05.2024
(51) Int. Cl.: H01M 10/42, H01M 10/48, H01M 50/204, H01M 50/271, A62C 3/16

(54) **ENERGY STORAGE SYSTEM AND CONTROL METHOD THEREOF**

(30) Priority: 04.09.2023 KR 20230116864
(71) Applicant: SK On Co., Ltd., Seoul 03161 (KR)
(72) Inventor: KIM, Suk Chul, 34124 Daejeon (KR); PARK, Byung Jun, 34124 Daejeon (KR); BAEK, Moo Han, 34124 Daejeon (KR); JUNG, Jae Won, 34124 Daejeon (KR)
(74) Representative: Prüfer & Partner mbB Patentanwälte · Rechtsanwälte

(57) **Abstract**

An energy storage system includes a housing including an opening formed therein and an accommodation space disposed therein; a plurality of battery modules accommodated in the accommodation space; a door coupled to the housing and rotating and configured to open and close the opening; a measurement unit configured to derive an environmental value by measuring at least one of temperature, gas concentration, or pressure of the accommodation space in real time; and a control unit configured to compare the environmental value derived from the measurement unit with a predetermined limit value, wherein the control unit may be configured to open the door when the environmental value is determined to exceed the limit value.

## Description

### BACKGROUND

### 1. FIELD

The present disclosure generally relates to an energy storage system and a control method thereof.

### 2. DESCRIPTION OF RELATED ART

An energy storage system (ESS) may be a device or a system which may increase efficiency of overall power use by storing power already produced and may supply the stored power when power is needed.

As demand for such an energy storage system increases, a technique for swiftly manufacturing and providing an energy storage system may be necessary. Particularly, as an energy storage system is installed swiftly where needed, or as a required power value increases, an energy storage system having a movable structure may be necessary to swiftly expands the energy storage system.

When a fire occurs while an energy storage system is used, internal pressure of the energy storage system may increase due to agas caused by fire in the cabinet, such that there may be a risk of explosion.

Accordingly, internal gas may be discharged through a vent communicating an internal region and an external region of a cabinet to each other. However, since the amount of gas dischargeable by the vent is limited, it may be difficult to prevent a rapid increase in pressure in the cabinet due to thermal propagation and explosion caused therefrom.

Accordingly, a structure for effectively preventing explosion of the cabinet by properly opening door of the cabinet may be necessary.

### SUMMARY

An embodiment of the present disclosure is to provide an energy storage system which may prevent explosion caused by gas generated in a cabinet.

An embodiment of the present disclosure is to provide an energy storage system in which a door may be opened before a cabinet explodes depending on an internal state of the cabinet.

According to an aspect of the present disclosure, an energy storage system includes a housing including an opening formed therein and an accommodation space disposed therein; a plurality of battery modules accommodated in the accommodation space; a door coupled to the housing and rotating and configured to open and close the opening; a measurement unit configured to derive an environmental value by measuring at least one of temperature, gas concentration, or pressure of the accommodation space in real time; and a control unit configured to compare the environmental value derived from the measurement unit with a predetermined limit value.

The control unit may be configured to open the door when the environmental value is determined to exceed the limit value.

When it is determined that the environmental value exceeds the limit value, the control unit may open the door after waiting for a predetermined standby time.

The standby time may be 60 seconds to 180 seconds.

The energy storage system may further include a door lock unit disposed on at least one of the door or the housing and configured to maintain a closed state of the opening of the door, wherein, when it is determined that the environmental value exceeds the limit value, the control unit transmits an unlock signal to the door lock unit, and wherein, when an unlock signal is applied, the door lock unit releases the closed state of the door.

The energy storage system may further include a door actuator disposed on at least one of the door or the housing and configured to apply force in a direction in which the door opens.

The door actuator may include a gas spring of which one end and the other end are disposed on the door and the housing, respectively, and rotate.

The measurement unit may include at least one of a temperature sensor configured to measure a temperature of the accommodation space, a gas sensor configured to measure a concentration of gas in the accommodation space, or a pressure sensor configured to measure pressure of the accommodation space, and the environmental value includes at least one of a measured value of the temperature sensor, a measured value of the gas sensor, or a measured value of the pressure sensor.

The measurement unit may be disposed on one surface of the door facing the accommodation space.

Among the temperature sensor, the gas sensor, and the pressure sensor, the gas sensor may be disposed on the highest level.

The energy storage system may further include a venting unit communicating the accommodation space to an external side and configured to discharge gas from the accommodation space, wherein, among the temperature sensor, the gas sensor and the pressure sensor, the gas sensor has the shortest distance to the venting unit.

The venting unit may include at least one of a first venting unit disposed above the housing or a second venting unit disposed on the door.

The measurement unit may be disposed on a level lower than the first venting unit and may be disposed on a level higher than the second venting unit.

According to an aspect of the present disclosure, a control method of an energy storage system including a housing including an opening disposed therein and including a plurality of battery modules accommodated in an internal accommodation space thereof, and a door configured to open and close the opening includes a measurement operation of deriving an environmental value by measuring at least one of a temperature, a gas concentration, or pressure of the accommodation space in real time; an operation of comparing the environmental value with a predetermined limit value and determining whether the environmental value exceeds the limit value; and an operation of opening the door when it is determined that the environmental value exceeds the limit value.

The measurement operation may further include measuring a gas concentration in the accommodation space when a temperature of the accommodation space exceeds a predetermined temperature.

The limit value may be a condition corresponding to the environmental value and includes at least one of 100 degrees Celsius in the accommodation space or a lower flammable limit (LFL), 10%.

When it is determined that the environmental value exceeds the limit value, a standby state may be maintained for a predetermined standby time before opening the door.

The standby time may be 60 seconds S to 180 seconds S.

### BRIEF DESCRIPTION OF DRAWINGS

Predetermined aspects, features, and advantages of the present disclosure are illustrated by the following detailed description with reference to the accompanying drawings.
FIG. 1 is a diagram illustrating a state in which a plurality of energy storage systems are connected to each other according to an embodiment of present disclosure;
FIG. 2 is a perspective diagram illustrating an energy storage system of which a door is opened according to an embodiment of present disclosure;
FIG. 3 is a perspective diagram illustrating an example in which battery cells are stacked in a battery module according to an embodiment of present disclosure;
FIG. 4 is an enlarged diagram illustrating A in FIG. 2;
FIG. 5 is a diagram illustrating a state in which a battery module is inserted into a cabinet according to an embodiment of present disclosure;
FIG. 6 is a diagram illustrating an example in which a guide unit, a fixed member and a door pushing portion are coupled to a cabinet according to an embodiment of present disclosure;
FIG. 7 is a diagram illustrating an upper side of an internal frame according to an embodiment of present disclosure;
FIG. 8 is a perspective diagram illustrating an upper frame of an energy storage system according to an embodiment of present disclosure, viewed from below;
FIG. 9 is a diagram illustrating an example of gas generated in an energy storage system according to an embodiment of present disclosure;
FIG. 10 is a perspective diagram illustrating an energy storage system according to another embodiment of present disclosure;
FIG. 11 is a cross-sectional diagram illustrating a second venting unit according to another embodiment of present disclosure;
FIG. 12 is a cross-sectional diagram illustrating V2 in FIG. 11;
FIG. 13 is a diagram illustrating gas discharge to a second venting unit according to another embodiment of present disclosure;
FIG. 14 is a diagram illustrating a control structure of which a door is opened according to another embodiment of present disclosure;
FIG. 15 is a flowchart of a control method according to another embodiment of present disclosure; and
FIG. 16 is a flowchart of a control method according to another embodiment of present disclosure.

### DETAILED DESCRIPTION

The embodiments of the present disclosure are illustrated in embodiments with reference to the accompanying drawings.

These embodiments are described in sufficient detail to enable those skilled in the art to practice the invention. It is to be understood that the various embodiments of the invention, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, therefore, not to be taken in a limiting sense, and the scope of the present disclosure are defined only by appended claims, appropriately interpreted, along with the full range of equivalents to which the claims are entitled.

In the drawings, same elements will be indicated by same reference numerals. For ease of description, the same reference numerals may be used in different embodiments. That is, even when components having the same reference numerals are illustrated in a plurality of drawings, the plurality of drawings do not all refer to the same embodiment.

An expression used in the singular encompasses the expression of the plural, unless it has a clearly different meaning in the context. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the descriptions below, the terms such as an upper side, an upper portion, a lower side, a lower portion, a side surface, a front surface, a rear surface, and the like, may be denoted with respect to the directions indicated in the drawings, and may be represented differently when the direction of the component changes.

The terms "first," "second," and the like may be used to distinguish one element from the other, and may not limit a sequence and/or an importance, or others, in relation to the elements. In some cases, a first element may be referred to as a second element, and similarly, a second element may be referred to as a first element without departing from the scope of right in the embodiments.

As an example, an order of use or arrangement of a component combined with such an ordinal number should not be limited by the number. when necessary, each number may be used interchangeably.

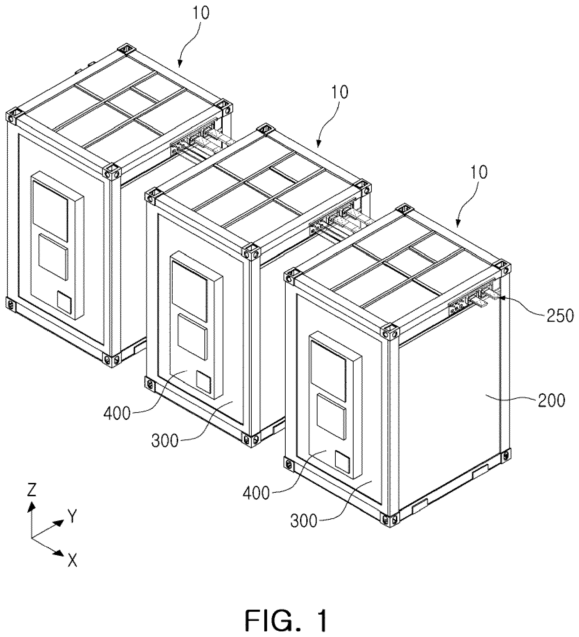

FIG. 1 is a diagram illustrating a state in which a plurality of energy storage systems are connected to each other according to an embodiment.

An energy storage system 10 in the embodiment may be configured as a device or system which stores electrical energy and supplies the stored energy when power is needed, and may be an energy storage system (ESS) including a battery cell therein.

Referring to FIG. 1, a plurality of the energy storage systems 10 in the embodiment may be electrically connected to each other. The energy storage system 10 in the embodiment may be used as an energy source for home or industrial purposes.

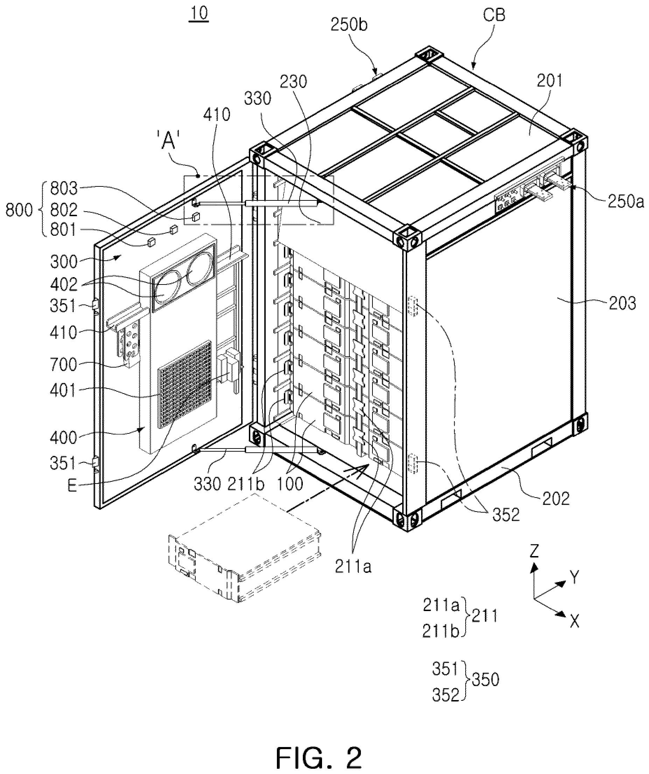

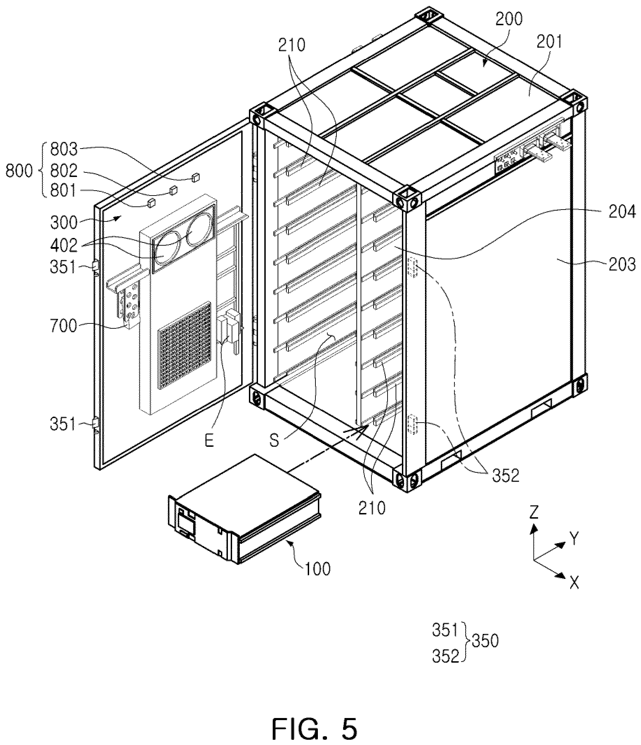

The energy storage system 10 in the embodiment may include a cabinet CB forming an exterior and storing a battery module (100, see FIG. 2) therein. Specifically, the cabinet CB may include a housing 200 in which the battery module 100 is stored in an internal accommodation space (S, see FIG. 5) thereof and an opening is formed on at least one side thereof, and a door 300 disposed to open and close the opening of the housing 200 and closing the accommodation space S. For example, the door 300 may be disposed on the housing 200 and may rotate, and may open and close the opening of the housing 200 while rotating.

The cooling unit 400 may be disposed in the door 300. The cooling unit 400 may be configured to supply a cooling medium into the housing 200 or to suction the cooling medium in the housing 200.

Here, the term "cooling medium" may refer to a cooling fluid such as gas or liquid which may cool the accommodation space S of the housing 200 and the components (e.g., the battery module 100, and the like) accommodated in the accommodation space S.

The cooling unit 400 may include an air conditioning device which may control temperature and humidity of the internal space of the housing 200 such that the battery module 100 may operate in an appropriate environment.

Also, the plurality of energy storage systems 10 may be electrically connected to each other through a connection portion 250. As an example, a connection portion may be exposed on one side surface of the cabinet CB of one of the energy storage systems 10, and the connection portion may be connected to a connection portion of another neighboring energy storage system 10. As such, the plurality of energy storage system 10 may be electrically connected to each other and may implement a large capacity energy source.

Also, the energy storage system 10 may include a connection portion 250 used for electrical connection with other neighboring energy storage systems. For example, the connection portion 250 may include a bar-type member formed of a conductive material and may be exposed to the external environment on one side of the housing 200.

The connection portion 250 may be electrically connected to the plurality of battery modules 100 disposed on an internal side of the housing 200, and may include a first connection portion (250a, see FIG. 2) and a second connection portion (250b, see FIG. 2) disposed on opposite surfaces of the housing 200.

The energy storage system 10 may be electrically connected to other energy storage systems disposed on both sides of the energy storage system 10 through the first connection portion 250a and the second connection portion 250b.

In the description below, the energy storage system 10 according to the embodiment will be described in greater detail. Since the energy storage system 10 and the battery module 100 described below corresponds to the energy storage system 10 and the battery module 100 in FIG. 1, overlapping descriptions will not be provided.

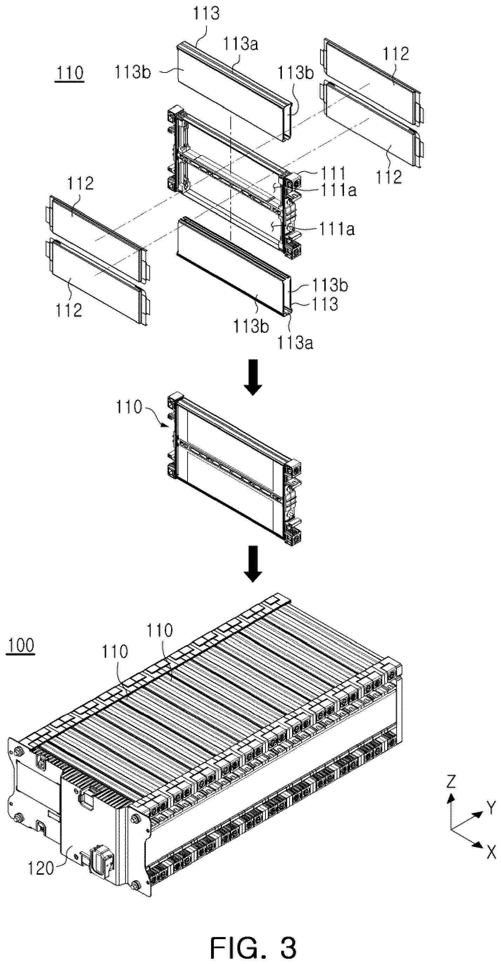

FIG. 2 is a perspective diagram illustrating an energy storage system of which a door is opened according to an embodiment. FIG. 3 is a perspective diagram illustrating an example in which battery cells are stacked in a battery module according to an embodiment.

Referring to FIG. 2, a cabinet CB may include a housing 200 including an accommodation space S formed therein and having opened one side, and a door 300 disposed on the housing 200 and configured to open and close the opening of the housing 200. The plurality of battery modules 100 may be loaded into the accommodation space (S, see FIG. 5) through the opening of the housing 200.

Also, the cabinet CB may include a holder 210 disposed in the housing 200 such that the battery module 100 may be mounted thereon, and a plurality of battery modules 100 may be loaded into the accommodation space S by the holder 210.

The housing 200 may be a structure in which the battery module 100 may be accommodated. The housing 200 may be provided as a box-shaped member to which an upper frame 201, a lower frame 202 and a plurality of side frames 203 are coupled and includes an opening.

The housing 200 may include a material having a predetermined stiffness. For example, the housing 200 may include a metal material such as iron, aluminum, or stainless steel. In addition to a metal, the material of the housing 200 may be any material which may be strong enough to maintain an exterior shape of the housing 200 and to protect the battery modules 100 therein.

The door 300 may be coupled to the opening of the housing 200 and may be opened and closed. For example, the door 300 may be hinge-coupled to rotate in the housing 200. As the door 300 rotates, the opening of the housing 200 may be opened and closed.

Also, the energy storage system 10 according to the embodiment may further include a cooling unit 400 including a discharge portion 401 through which the cooling medium is discharged and a suction portion 402 for suctioning and recovering the cooling medium discharged from the discharge portion 401.

In the cooling unit 400, the discharge portion 401 and the suction portion 402 may be disposed in a height direction (the Z-axis direction in the diagram), and the discharge portion 401 may be disposed on a lower end of the cooling unit 400, and the suction portion 402 into which the cooling medium is suctioned may be disposed on an upper end of the cooling unit 400. Since the temperature of the cold cooling medium discharged from the discharge portion 401 may gradually increase through heat exchange with the battery module 100 and may flow upwardly, an efficient cooling flow may be implemented in the housing 200 by disposing the suction portion 402 on an upper end of the discharge portion 401.

Also, the energy storage system 10 according to the embodiment may further include a guide unit 230 for guiding the flow of the cooling medium discharged from the cooling unit 400 into the housing 200. At least a portion of the guide unit 230 may have a plate shape and may be disposed on a back surface of the cooling unit 400.

The guide unit 230 may be disposed between the cooling unit 400 and the battery module 100 and may prevent the cold cooling medium discharged from the discharge portion 401 from flowing directly into the suction portion 402. Accordingly, the flow direction of the cold cooling medium discharged from the discharge portion 401 may be guided to be directed to the battery module 100.

Also, the energy storage system 10 may further include an auxiliary guide unit 410 disposed on the door 300. The auxiliary guide unit 410 may be configured to guide the flow of the cooling medium together with the guide unit 230.

The energy storage system 10 according to the embodiment may include a measurement unit 800 configured to measure the environmental state, such as temperature and gas, in the accommodation space S and to derive an environmental value.

The measurement unit 800 may include at least one of a temperature sensor 801 configured to measure the temperature of accommodation space S, a gas senser 802 configured to measure the type and a concentration of gas in the accommodation space S, and a pressure senser 803 configured to measure the pressure of accommodation space S.

The temperature senser 801, the gas senser 802, and the pressure senser 803 may measure temperature, gas, and pressure of the accommodation space S in real time, and may derive values corresponding to temperature and gas, pressure among the environmental values.

The gas senser 802 may sense gas generated when the battery module 100 ignites. When the battery module 100 ignites, hydrogen gas, methane gas, carbon monoxide, carbon dioxide and water vapor may be generated, and at least one of the gases may be a trace gas indicating that a fire has occurred in the battery module 100.

In other words, the gas senser 802 may derive an environmental value by determining whether the trace gas indicating a fire has occurred is detected in the battery module 100 and measuring the concentration of the gases.

The environmental value derived through the measurement unit 800 may be transmitted to control unit C, which will be described later, and the control unit C may open and close the door 300 in response to the environmental value.

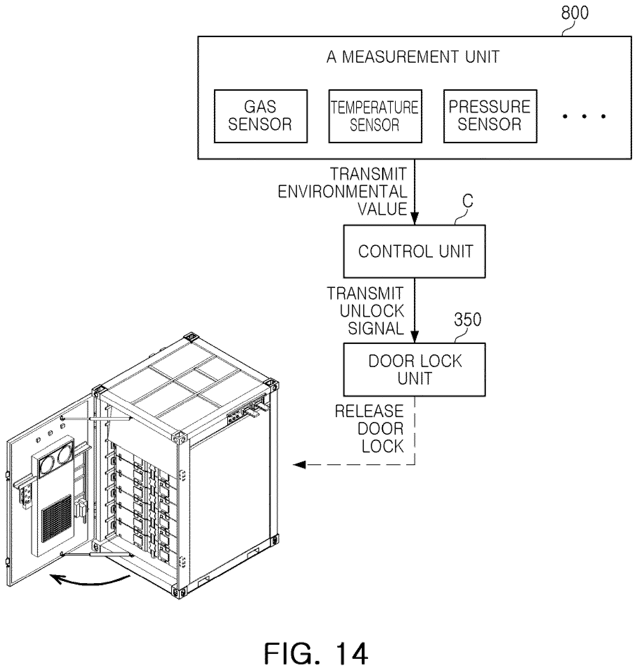

The method of opening the door 300 through the measurement unit 800 and the control unit C will described in greater detail with reference to FIGS. 14 to 16.

According to the embodiment, a door actuator 330 for applying force in the direction in which the door 300 is opened and a door lock unit 350 for fixing the door 300 to the housing 200 such that the door 300 may be maintained to be closed to the housing 200.

The door lock unit 350 may include a latch portion 351 disposed on one of the door 300 or the housing 200 and a latch fixing portion 352 disposed on the other one and engaged with the latch portion 351.

As an example, the latch portion 351 may be disposed to protrude from a side surface of the door 300, and the latch fixing portion 352 may be provided to accommodate and fix the latch portion 351 to the housing 200 in a position corresponding thereto.

The latch fixing portion 352 may be controlled by a control unit C, which will be described later, such that the locking with the latch portion 351 may be released, and in this case, the door 300 may be opened by pressure of the door actuator 330 or the accommodation space S, which will be described later.

The door lock unit 350 described above may be merely an example, and any structure of an electronic locking device which may release the coupling between the door 300 and the housing 200 by a signal transmitted by the control unit C may be included in the embodiment.

Also, two pairs of the door lock unit 350 may be disposed adjacent to upper and lower portions of the cabinet CB, respectively.

According to the embodiment, a door actuator 330 for applying force in a direction in which the door 300 is opened may be further included.

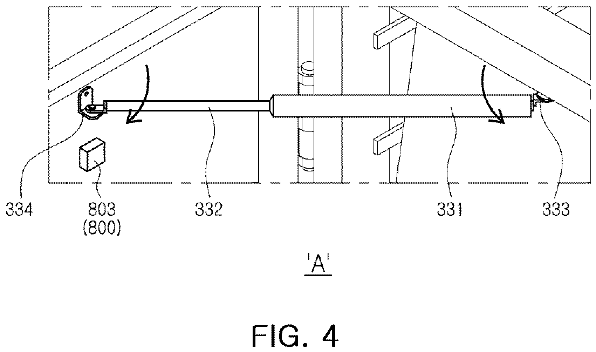

Referring to FIG. 4, the door actuator 330 may be disposed on at least one of the housing 200 or the door 300, and may apply force in a direction in which the door 300 is opened.

As an example, the door actuator 330 may include a gas spring and may apply force in the direction in which the door 300 is opened. The door actuator 330 may include a gas cylinder 331 in which gas or fluid is accommodated, and a cylinder rod 332 at least partially inserted into the gas cylinder 331 and moving back and forth in the extension direction of the gas cylinder 331.

Also, a first bracket 333 coupled to the housing 200 on an end of the gas cylinder 331 and a second bracket 334 coupled to the door 300 on an end of the cylinder rod 332 may be included. The door actuator 330 may open the door 300 by rotating in opposite directions with respect to the first bracket 333 and the second bracket 334 disposed on both sides ends.

However, this is merely an example, and the door actuator 330 in the embodiment may include any component disposed to apply force to the door 300 such that the door 300 may rotate in the opening direction.

Referring to FIG. 3, the battery module 100 may include one or more battery cells 112 for charging and discharging, and may be configured to store or emit electrical energy.

As an example, a battery cell 112 included in the battery module 100 may be configured as at least one of a pouch-type secondary battery, a cylindrical secondary battery, and a prismatic secondary battery.

Each of the battery modules 100 may include one or more sub-modules 110, each including a plurality of battery cells 112.

According to the embodiment, the battery module 100 may include a module cover 120 on which one or more sub-modules 110 are stacked. The module cover 120 may cover at least one side of one or more sub-modules 110. Also, one or more sub-modules 110 may be stacked in a predetermined direction (the X-axis direction in the diagram), and each sub-module 110 may include the plurality of battery cells 112.

The sub-module 110 may be provided with a plurality of battery cells 112 accommodated in the cell support member 111. As an example, in the cell support member 111, a plurality of cell receiving units 111a in the form of a quadrangular frame surrounding a side portion of at least one battery cell 112 may be disposed, and a pair of battery cells 112 may be accommodated in each of the cell receiving units 111a.

The battery cell 112 may include an electrode assembly formed by stacking an anode, a cathode, and a separator, and a cell body member for accommodating the electrode assembly and forming an exterior of the battery cell 112.

The electrode assembly according to the embodiment may be stacked in order while a separator is interposed between the positive electrode plate and the negative electrode plate. The electrode assembly may be a winding type, stacking type, z-folding type, or stack-folding type assembly.

In the embodiment, the cell support member 111 may include two cell receiving units 111a disposed in the height direction (Z-axis-direction in the diagram), and in each of the cell receiving units 111a, a pair of battery cells 112 may be stacked and accommodated in the stacking direction (X-axis direction in the diagram) of the sub-module 110.

Also, the sub-module 110 in the embodiment may further include a sub-case 113 surrounding at least a portion of the plurality of battery cells 112 exposed externally of the cell support member 111. The sub-case 113 may accommodate a pair of battery cells 112 stored in the cell receiving unit 111a of the cell support member 111.

Specifically, the sub-case 113 may include a first plate 113a and two second plates 113b extending from both sides of the first plate 113a and disposed to face a surface of the battery cell 112 in the stacking direction (X-axis direction in the diagram). The sub-case 113 may be coupled to the cell support member 111 such that a pair of battery cells 112 may be disposed in an internal space thereof, and accordingly, the second plate 113b on both sides of the sub-case 113 may enclose and cover side surfaces of the pair of battery cells 112 and may pressurize the pair of battery cells 112 in the stacking direction (X-axis direction in the diagram).

However, the example illustrated in FIG. 3 is merely an example, and in other embodiments, the structure of the cell support member 111 or the number of battery cells 112 accommodated in the cell support member 111 may be different from the other illustrated embodiments.

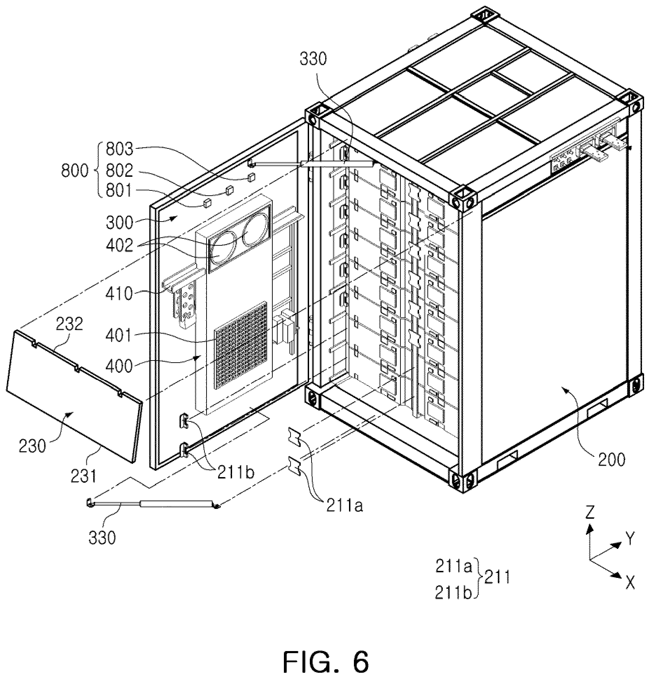

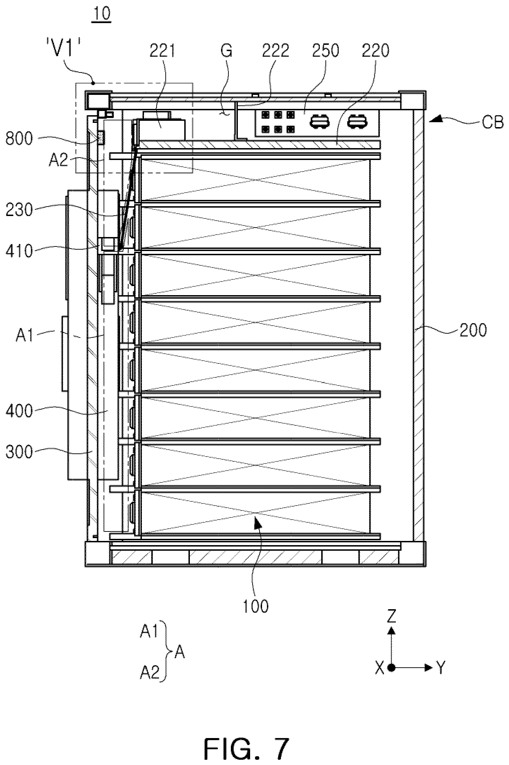

FIG. 5 is a diagram illustrating a state in which a battery module is inserted into a cabinet according to an embodiment. FIG. 6 is a diagram illustrating an example in which a guide unit, a fixed member and a door pushing portion are coupled to a cabinet according to an embodiment. FIG. 7 is a diagram illustrating an upper side of an internal frame according to an embodiment.

Referring to FIGS. 5 to 7 together, the plurality of battery modules 100 may be stacked in one direction with a predetermined distance from the accommodation space S.

As an example, with respect to the diagram, the battery module 100 may be inserted into the accommodation space S in the Y-axis direction through the opening of the housing 200, may be disposed in the holder 210, and may be stacked in the Z-axis direction.

One or more holders 210 may be disposed between an upper frame 201 and a lower frame 202 of the housing.

The holder 210 may be provided as a structure such as a shelf or a rail extending from the accommodation space S in the direction in which the battery module 100 is inserted (Y-axis direction in the diagram). A plurality of holders 210 may be arranged in the Z-axis direction in the accommodation space S, and accordingly, the battery module 100 may be disposed in layers in the accommodation space S.

The extension direction of the holder 210 and the insertion direction of the battery module 100 are not limited thereto. As an example, the holder 210 may be disposed to be inclined, and accordingly, the battery module may also be inserted into the accommodation space S in an inclined manner.

Also, according to the embodiment, the battery module 100 may further include a fixed member 211 for supporting and fixing the battery module 100 mounted on the holder 210.

The fixed member 211 may be disposed on one surface of the battery module 100 so as to face the direction (Y-axis direction in the diagram) in which the battery module 100 is accommodated in the accommodation space S.

In other words, the fixed member 211 may be disposed between the door 300 and the battery module 100 and may fix one surface of the battery module 100 mounted on the holder 210, thereby preventing the battery module 100 from separating toward the opening when the door 300 is opened.

Also, in the housing 200, the battery module 100 may be accommodated in a plurality of columns. As an example, the housing 200 may further include a partition 204 for partitioning the internal space S, and the holders 210 may be disposed on both sides of the partition (204, see FIG. 5) such that a plurality of 100 battery modules may be mounted on the same level in the accommodation space S.

Also, the fixed member 211 may include a first fixed member 211a and a second fixed member 211b fastened to different portions of the battery module 100.

As an example, the first fixed member 211a and the second fixed member 211b may be coupled to both sides of each of the battery modules 100. The first fixed member 211a may be disposed close to one side of both sides of the battery module 100, and the second fixed member 211b may be disposed close to the other side of both sides of the battery module 100 and may support the battery module 100.

When a fire occurs in the cabinet CB, there may be a risk that the battery module 100 or the electrical component E in the cabinet CB may be damaged by the flame. Here, the electrical component E may refer to a control means related to energy charging and discharging of the energy storage system 10 and a circuit substrate connected thereto, such as a signal transmission means, a battery management system (BMS), various types of sensors including a voltage sensor for controlling the battery module 100, the control unit C.

Also, the energy storage system 10 in the embodiment may further include a fire extinguishing unit 700 to swiftly extinguish a fire occurring in the electrical component E and the battery module 100. The fire extinguishing unit 700 may include an extinguishing agent which may extinguish a flame, and may release the extinguishing agent into the internal space S of the cabinet CB while fire occurs. The fire extinguishing unit 700 may be controlled by control unit C or temperature and may extinguish fire by spraying the extinguishing agent in the form of aerosol-type particles into the accommodation space S.

Referring to FIG. 7, the guide unit 230 or the auxiliary guide unit 410 may be configured to reduce a region (or a volume) to be extinguished by the fire extinguishing unit 700.

As an example, the guide unit 230 may divide a space between the front surface of the battery module 100 and the door 300 into two or more spaces A1 and A2, and accordingly, the space covered by the aerosol sprayed from the fire extinguishing unit 700 to extinguish a fire may be reduced.

Specifically, the guide unit 230 may be in contact with the door 300 and may divide the front surface space A between the battery module 100 and the door 300 into the first region A1 and the second region A2.

The first region A1 may be a space between a lower surface of the guide unit 230 and the battery modules 100, and the second region A2 may be a space between an upper surface of the guide unit 230 and the door 300.

As described later, a measurement unit 800 may be installed in at least one of the first region A1 and the second region A2.

Also, the first edge 231 of the guide unit 230 may be disposed adjacent to the cooling unit 400 with the door 300 closed, and the second edge 232, opposite the first edge 231, may be coupled to be adjacent to the internal frame 220.

While the door 300 is closed, a first edge 231 of the guide unit 230 may be disposed between the discharge portion 401 and the suction portion 402 of the cooling unit 400. Also, the first edge 231 of the guide unit 230 may be disposed adjacent to an end of the auxiliary guide unit 410, disposed on at least one side of the cooling unit 400.

Meanwhile, referring to FIG. 7, the housing 200 may further include an internal frame 220 disposed above the battery module 100. A spacing G may be formed between the internal frame 220 and the upper frame 201. Here, the spacing G may include a control unit 221 and a circulation unit 222.

The control unit 221 may include a battery management system (BMS) module, a battery protection unit (BPU) module, and the like. The control unit 221 may be seated and assembled on the internal frame 220 and may safely control the battery modules 100. The circulation unit 222 may guide a flow direction of the cooling medium in spacing G. For example, the circulation unit 222 may include one or more circulation fans 222a and may guide the cooling medium flowing into the spacing G to flow from the rear side of the housing 200 toward the front side.

When a fire occurs in the energy storage system 10, there is a risk that the cabinet CB may explode as the internal pressure increases due to the gas caused by the fire. Also, when the door 300 is opened while the internal pressure is increased, flame may erupt instantly through the opening of the housing 200, a user may be injured or flames may spread to adjacent electronic devices.

To prevent this, the energy storage system 10 according to the embodiment may include venting units 500 or 600 communicating with an exterior of the accommodation space S and the cabinet CB and discharging the gas generated in the accommodation space S to the exterior.

As described later, the venting units 500 and 600 may include at least one first venting unit 500 formed on the upper frame 201 of the housing 200 and a second venting unit 600 disposed on the door 300, and the energy storage according to the embodiment System 10 may include at least one of the first venting unit 500 or the second venting unit 600.

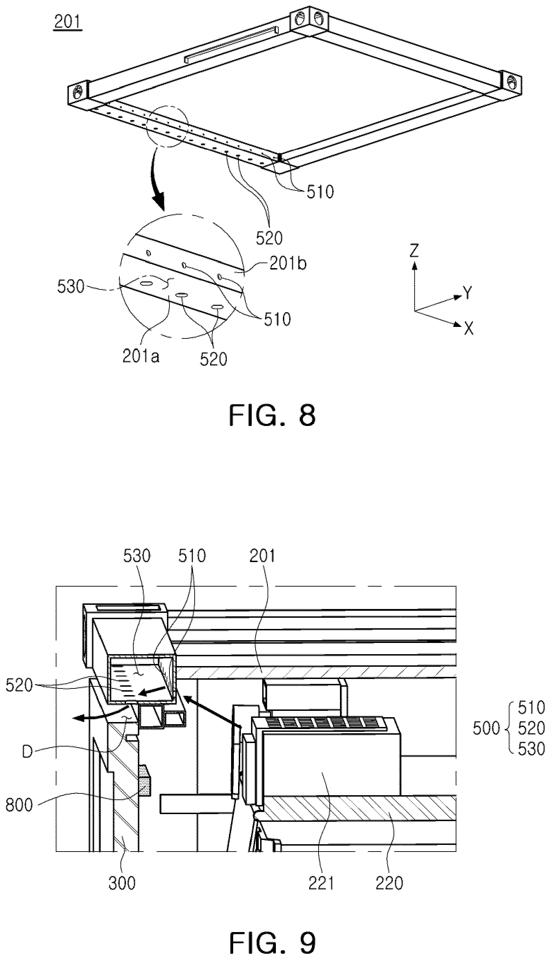

FIG. 8 is a perspective diagram illustrating an upper frame of an energy storage system according to an embodiment. FIG. 9 is a diagram illustrating an example of gas generated in an energy storage system according to an embodiment.

Referring to FIGS. 8 and 9 together, the venting unit 500 may include one or more inlet ports 510 configured to communicate with the internal space S of the cabinet CB and to allow gas to flow in, and one or more outlet ports 520 configured to allow gas flowing into the inlet port 510 to be discharged externally of the cabinet CB. The first venting unit 500 may be disposed on the upper frame 201 of the cabinet CB.

The inlet port 510 may be provided in the form of a hole communicating with the internal space S of the cabinet CB. The outlet port 520 may be disposed on an external side surface of the cabinet CB and may be provided in the form of a hole communicating with the inlet port 510. Gas generated in the internal space S of the cabinet CB may flow in through the inlet port 510 and may be discharged externally of the cabinet CB through the outlet port 520. A plurality of the inlet ports 510 and the outlet ports 520 may be provided in the cabinet CB.

The outlet port 520 may be configured to open in a downward direction of the cabinet CB (-Z-axis-direction of the diagram). Here, the term "downward direction of the cabinet CB" may refer to the direction from the upper frame 201 of the cabinet CB toward the lower frame.

Through this structure, rain, snow, or other foreign substances from the external environment of the energy storage system 10 may be prevented from flowing in through the outlet port 520.

In an embodiment, spacing D may be provided between the upper frame 201 and the door 300, and the outlet port 520 may be configured to communicate with the spacing D.

As an example, the upper frame 201 may include a first surface 201a facing the door 300 in the second direction (Z-axis-direction), that is, in the height direction of the housing 200, and the outlet port 520 may be provided in the form of a hole opened in the first surface 201a. A plurality of the outlet ports 520 may be provided in the third direction (X-axis-direction) perpendicular to the second direction (Z-axis-direction) on the first surface 201a.

The upper frame 201 may include a second surface 201b at least partially exposed to the internal space S of the housing 200, and one or more inlet ports 510 may be provided on the second surface 201b of the upper frame 201.

The upper frame 201 may further include a hollow portion 530 communicating with the inlet port 510 and the outlet port 520. An edge of the upper frame 201 may include a hollow portion 530 extending in the third direction (X-axis-direction), and each of the inlet port 510 and the outlet port 520 may communicate with the hollow portion 530. Gas generated in the internal space S of the housing 200 may flow into the hollow portion 530 through the inlet port 510 and may be discharged externally of the cabinet CB through the outlet port 520.

As such, as the gas in cabinet CB is properly discharged to the exterior of the cabinet CB through the venting unit 500, internal pressure of the cabinet CB may not increase beyond a predetermined level, such that explosion of the energy storage system 10 may be prevented in advance.

Also, since the outlet port 520 is opened through the spacing D between the upper frame 201 and the door 300, rainwater or foreign substances may be effectively prevented from flowing into the outlet port 520 from the external region of the cabinet CB .

Since the gas in the accommodation space S is discharged through the first venting unit 500, the measurement unit 800 may be disposed close to the first venting unit 500.

For example, among a temperature senser 801, a gas senser 802 and a pressure senser 803, the gas senser 802 may be disposed most adjacent to the first venting unit 500. Also, since the internal pressure of accommodation space S does not vary significantly depending on a position of the pressure senser 803, the pressure senser 803 may be disposed furthest from the venting unit 500 among the temperature senser 801, the gas senser 802 and the pressure senser 803.

In the diagram, the temperature sensor 801, the gas senser 802 and the pressure sensor 803 may be disposed in a row on the same level in the door 300, but an embodiment thereof is not limited thereto, and, the sensors may be spaced apart from each other in the height direction (Z-axis-direction in the diagram) and the width direction (X-axis-direction in the diagram). That is, the gas senser 802 may be disposed on a level higher than the temperature senser 801 and the pressure senser 803.

Differently from the first venting unit 500 formed in the upper frame 201 of the housing 200, according to another embodiment, the second venting unit 600 may be formed in the door 300.

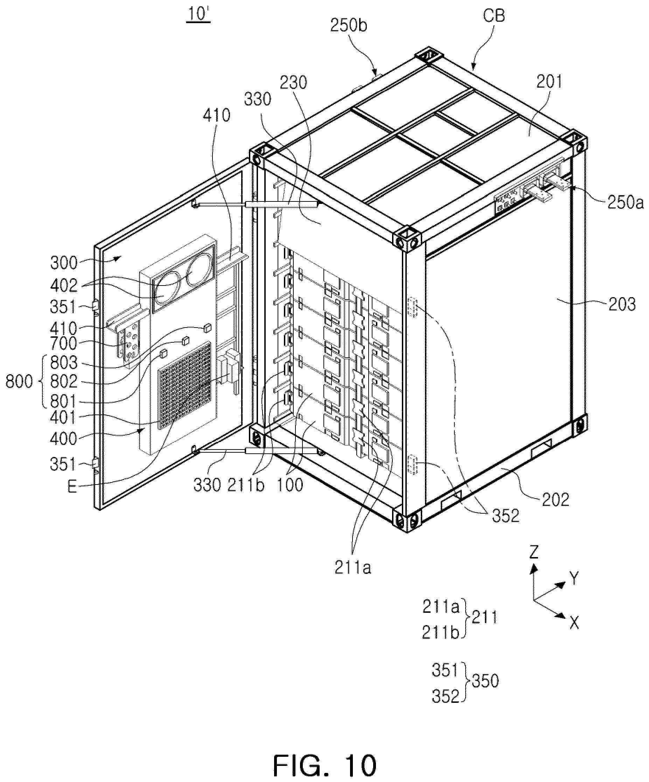

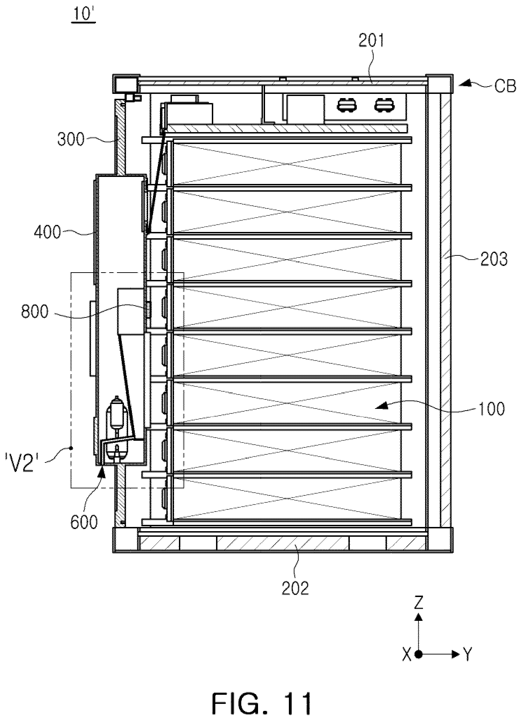

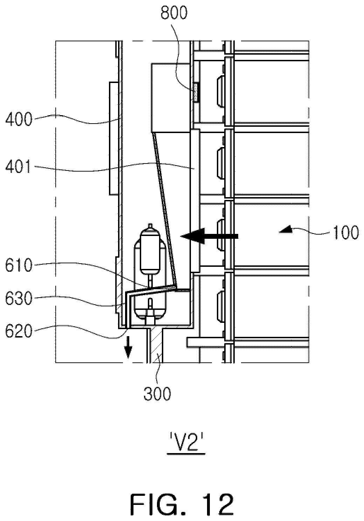

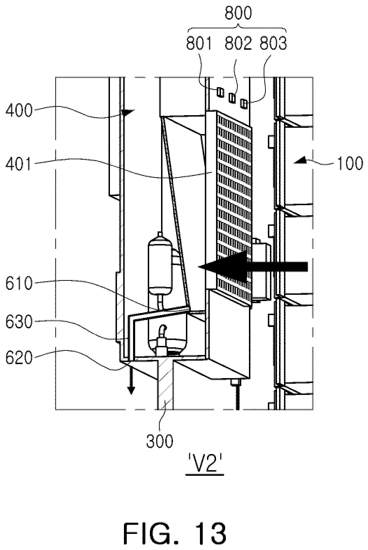

FIG. 10 is a perspective diagram illustrating an energy storage system according to another embodiment. FIG. 11 is a cross-sectional diagram illustrating a second venting unit according to another embodiment. FIG. 12 is a cross-sectional diagram illustrating V2 in FIG. 11. FIG. 13 is a diagram illustrating gas discharge to a second venting unit according to another embodiment.

An energy storage system 10' including a second venting unit 600 will be described with reference to FIGS. 10 to 13, but this is merely an example, and the energy storage system 10' according to another embodiment also may include a first venting unit 500.

The second venting unit 600 may include at least one inlet port 610 configured to communicate with an internal space S of a cabinet CB to allow gas to flow in, and at least one outlet configured to allow gas flowing into the inlet port 610 to be discharged to the exterior of the cabinet CB.

The inlet port 610 may be provided in the form of a hole communicating with the internal space S of the cabinet CB. The outlet port 620 may be disposed on an external side surface of the cabinet CB and may be provided in the form of a hole communicating with the inlet port 610. Gas generated in the internal space S of the cabinet CB may flow in through the inlet port 610 and may be discharged externally of the cabinet CB through the outlet port 620.

The energy storage system 10 may include a drain pipe 630 configured to discharge condensate water generated in the cooling unit 400, and the inlet port 610 and the outlet port 620 of the second venting unit 600 may be connected to the drain pipe 630.

Accordingly, it may not be necessary to create an additional gas discharge structure in the cabinet CB, and the drain pipe 630 of the cooling unit 400 may be used as a gas flow passage.

In other words, gas generated in the internal space S of the housing 200 may flow into the drain pipe 630 through the inlet port 610 and may be discharged externally of the cabinet CB through the outlet port 620.

The outlet port 620 of the second venting unit 600 may be configured to be opened in the downward direction of the cabinet CB (-Z-axis-direction in the diagram). Accordingly, rain, snow, or other foreign substances from the external environment of energy storage system 10 may be prevented from flowing into the accommodation space S through the outlet port 620.

Since the gas in the accommodation space S is discharged through the second venting unit 600, the measurement unit 800 may be disposed close to the second venting unit 600.

For example, among a temperature senser 801, a gas senser 802 and a pressure senser 803, the gas senser 802 may be disposed most adjacent to the second venting unit 600. Also, since internal pressure of accommodation space S does not vary significantly depending on a position of pressure senser 803, the pressure senser 803 may be disposed furthest from the second venting unit 600 among the temperature senser 801, the gas senser 802 and the pressure senser 803.

The first venting unit 500 and the second venting unit 600 have been described separately, but the energy storage system 10 in the embodiment may include both the first venting unit 500 and the second venting unit 600.

As an example, in this case, the measurement unit 800 may be disposed between the first venting unit 500 and the second venting unit 600.

As another example, in this case, a plurality of measurement units 800 may be provided adjacent to each of the first venting unit 500 and the second venting unit 600. Specifically, referring back to FIG. 7, the measurement unit 800 may be provided in each of a first region A1 and a second region A2, where the space is partitioned by the guide unit 230. The measurement unit 800 disposed in the first region A1 may intensively sense gas passing through the second venting unit 600, and the measurement unit 800 disposed in the second region A2 may intensively sense gas passing through the first venting unit 500.

According to the embodiment, when an abnormal event (such as a sudden increase in temperature or pressure) occurs in the energy storage system 10, the door 300 may be automatically opened to effectively prevent the cabinet CB from exploding.

Hereinafter, the control method according to the embodiment will be described with reference to the diagram, and the description overlapping those of FIGS. 1 to 13 will not be provided.

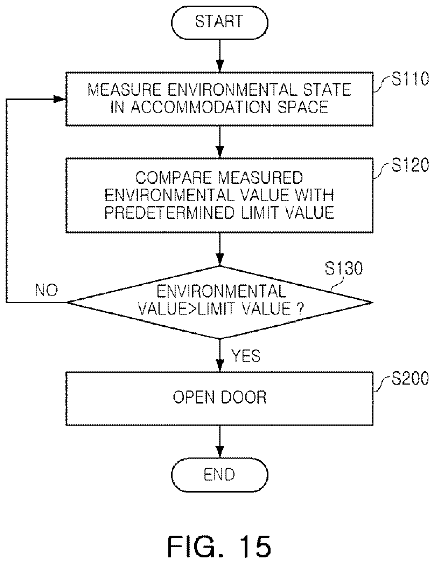

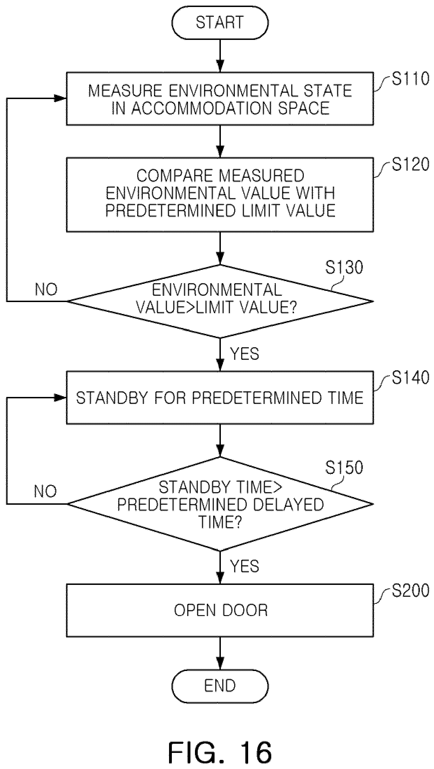

FIG. 14 is a diagram illustrating a control structure of which a door is opened according to another embodiment. FIG. 15 is a flowchart of a control method according to another embodiment. FIG. 16 is a flowchart of a control method according to another embodiment.

Referring to FIG. 14, according to the embodiment, when a measurement unit 800 for measuring a state environmental value of an accommodation space S in a cabinet CB transmits the measured environmental value to the control unit C, the control unit C may transmit an unlock signal to the door lock unit 350, and accordingly, the door 300 may be opened from the housing 200.

The measurement unit 800 may sense the environmental state of the accommodation space S and may derive the environmental value through the measured values or data. The measurement unit 800 may include at least one of a temperature sensor 801 for sensing temperature, a gas sensor 802 for detecting and sensing gas in accommodation space S, and a pressure sensor 803 for measuring internal pressure.

Here, the term "environmental state" may include temperature, humidity, pressure, type of gas to be measured, concentration of gas to be measured, and the like, and may refer to environmental data of the accommodation space S related to the state of the battery module 100. Also, the term "environmental value" may refer to data obtained as a result of real-time measurement of the environmental state of the accommodation space S by the measurement unit 800.

For example, when measurement unit 800 has only the temperature sensor 801, the environmental value may refer to the real-time measured temperature of the accommodation space S.

As another example, when the measurement unit may include the entirety of the temperature senser 801, the gas senser 802, and the pressure senser 803, the environmental value may refer to the real-time temperature of the accommodation space S, the concentration of the measured gas, and the pressure of the accommodation space S.

The measurement unit 800 may transmit the environmental value derived by measuring the environmental state of accommodation space S to the control unit C, and the control unit C may open the door 300 by processing the environmental value received through measurement unit 800.

As an example, when it is determined that opening is necessary by processing the received environmental value (see S 130 in FIG. 15), the control unit C may send an unlock signal to the door lock unit 350 maintaining the closed state of the door 300.

The door lock unit 350 may release the closed state of the door 300 in response to the unlock signal, thereby opening the door 300 through internal pressure of the accommodation space S or/and elastic force of the door actuator 330.

Here, the unlock signal may be configured as a current transmitted to the door lock unit 350. In other words, the door lock unit 350 may be configured to release the lock when a current is applied, such that, when current is applied to the door lock unit 350 by the control unit C, the door 300 may be opened.

Hereinafter, a control method of an energy storage system according to an embodiment will be described in detail with reference to FIG. 15. However, descriptions overlapping those described with reference to FIG. 14 will not be provided.

The control method of the energy storage system according to the embodiment may include a measurement operation (S 110) of measuring the environmental state in the accommodation space S by the measurement unit 800 and deriving an environmental value, a comparison operation (S120) of comparing an environmental value with a predetermined limit value, a determination operation (S130) of determining whether the environment value is greater than the predetermined limit value, and an opening operation (S200) of opening the door 300 when it is determined that the environmental value is greater than the predetermined value.

As described above in FIG. 14, the measurement operation (5110) may be of measuring the environmental state in the accommodation space S by the measurement unit 800 and deriving an environmental value.

As an example, the measurement operation (S 110) may be performed in real time in the entirety of operations other than the opening operation (S200). The measurement unit 800 may include measuring the temperature among the environmental values of the accommodation space S in real time while power is applied to the energy storage system 10. When the measured temperature continues to increase, the state may be considered an abnormal state, such that the measurement unit 800 may measure the environmental state of the accommodation space S in greater detail by further measuring environmental values other than temperature. However, this is merely an example, and any operations of deriving the environmental value of the accommodation space S may belong to the measurement operation (S 110).

The comparison operation (S120) may be of comparing the environmental value derived through the measurement unit 800 with the predetermined limit value by the control unit C.

Here, the limit value may be a data value pre-stored in the control unit C. When the limit value is exceeded, the limit value may refer to a value at which the cabinet CB may explode due to temperature and pressure of the accommodation space S. In other words, the limit value may vary depending on a size of the cabinet CB, a material, the number of battery module 100, the sub-module 110, and the battery cell 112 accommodated in the accommodation space S.

The limit value may include complex values such as a temperature, a concentration of predetermined gas, and a pressure, and when the environmental value exceeds one of the values, the control unit C may determine that the environmental value exceeds the predetermined limit value (S130, example).

As an example, the limit value may be an environment data value of the accommodation space S before explosion of the cabinet CB, and may refer to at least one of a temperature of 100 degrees and a concentration of combustible gas.

In other words, among the environmental values derived from the measurement operation (S110), in relation toa temperature, when the temperature of the accommodation space S exceeds 100 degrees, the control unit C may open the door 300.

The "combustible gas" may refer to methane gas, hydrogen gas, and the like, generated by fire in the battery cell 112, and "concentration of flammable gas" may refer to a specific value falling between a lower flammable limit (LFL) and an upper flammable limit (UFL), which are flammability limits.

The flammability limit of the combustible gas may be determined differently for each type of gas, but to improve safety, 10% of the lower flammable limit (LFL) may be determined as the limit value.

In other words, among the environmental values derived from the measurement operation (S110), when a concentration of combustible gas exceeds 10%, which is the lower flammable limit (LFL), the control unit C may open the door 300.

The control unit C may compare the environmental value with the limit value and may determine whether the environmental value exceeds the limit value (S130, determination operation). When it is determined that the environmental value exceeds the limit value, the control unit C may send an unlock signal to the door lock unit 350 to open the door 300 (S200). When the environmental value does not exceed the limit value (S130, no), the measurement unit 800 may continuously sense the environmental value.

When the environmental value exceeds the predetermined limit value, the control unit C may control the latch fixing portion 352 coupled to the latch portion 351 to release the coupled state of the door 300 and the housing 200 (S200).

When the coupling state between the door 300 and the housing 200 is released, the door 300 may be opened by internal pressure of the accommodation space S. Also, the door 300 may be opened through the door actuator 330.

Referring to FIG. 16, according to the control method according to another embodiment, the control unit C may further include a standby operation (S140) of being standby and delaying a predetermined time before opening the door 300.

In the control method according to another embodiment, when it is determined that the environmental value exceeds a predetermined limit value (S130, example), the door may be opened (S200) after a standby state for a predetermined time (S140).

Specifically, when the environmental value of the accommodation space S exceeds the predetermined limit value (S130, example), and the door 300 is opened without being in a standby state (standby time t=0s), oxygen may flow into the accommodation space S and the fire may increase rapidly. Conversely, when the standby state is prolonged and the door 300 is opened, the battery modules 100 in the accommodation space S may have already burned down, or the cabinet CB may explode before the battery modules 100 are burned down.

According to another embodiment, the safety of the energy storage system 10 may be further increased by performing the standby operation (S140) between the determination operation (S130) and the opening operation (S200).

The standby time t may be predetermined by the control unit C, similarly to the predetermined limit value stored in the control unit C. The control unit C may wait for a predetermined delay time from the time point (S130, example) at which the environmental value is determined to have exceeded the limit value and may open the door (S200).

In other words, when the control unit C determines that the environmental value exceeds the limit value (S130, example), it may indicate that an abnormal event (fire, and the like) has occurred in the accommodation space S. In this case, by waiting for a predetermined standby time t after an event occurs and opening the door 300, a time difference may be created between the time point at which the event is determined to have occurred (t=0) and the time point at which the door is opened.

Accordingly, by creating a time difference between the time point at which the flame is intense (the time point at which a great deal of oxygen in the accommodation space S is consumed by the flame) and the time point at which the door is opened (the time point at which oxygen flows into the accommodation space S), the spread of the flame occurring in the accommodation space S to the adjacent battery cell 112, the sub-module 110, or the battery module 100 may be delayed.

Referring again to FIG. 3, the battery module 100 may include a plurality of sub-modules 110, and each sub-module 110 may include a plurality of battery cells 112 (four battery cells in the diagram). In this case, when the door 300 is opened before the sub-module 110 burns down, oxygen may rapidly flow into the battery cell 112 in which fire occurred and the flame may swiftly spread to the adjacent battery cell 112.

When the door 300 is opened after fire occurs in the entirety of the battery cells 112 accommodated in the sub-module 110, even when oxygen flows in, flame spread may be delayed by a barrier disposed between the sub-modules 110, flame may not spread rapidly to the adjacent sub-module 110.

In other words, the spread of flame may be delayed by using the structure of the battery module 100, implemented with the plurality of battery cell 112 and the plurality of sub-module 110.

The standby time t in the standby operation (S140) may be determined in various manners depending on the number of the battery modules 100, and the number of the battery cells 112 accommodated in the sub-module 110.

As an example, standby time t may be a time value between t1 and t2. Here, t1 may be the minimum time taken for the sub-module 110, in which the plurality of battery cells 112 are accommodated, to burn down, that is, t1 may be the minimum time taken for the four battery cells 112 to burn down. t2 may refer to the maximum time taken for the battery module 100 in which the plurality of sub-module 110 is accommodated to burn down. For example, the standby time t may be 60 seconds to 3600 seconds.

As another example, the standby time t may be a time value between t1 and t3. Here, t1 may be the minimum time taken for the sub-module 110, in which a plurality of battery cells are accommodated, to burn down. t3 may refer to the maximum time taken for the sub-module 110 to burn down. In other words, t3 may refer to the maximum time taken for the four battery cells 112 to burn down. For example, the standby time t may be 60 to 180 seconds.

In the above-mentioned example, the specific value of the standby time t may be provided for ease of description, and even when the standby time t does not necessarily correspond to the above-mentioned value, any operation of being in a standby state for a predetermined time before the opening of door 300 included between the determination operation (S 130) and the opening operation (S200) may be included in the embodiment.

According to the aforementioned embodiments, an energy storage system which may prevent explosion caused by gas generated in a cabinet may be provided.

Also, an energy storage system in which a door may be opened before a cabinet explodes depending on an internal state of the cabinet may be provided.

Only specific examples of implementations of predetermined embodiments are described. Variations, improvements and enhancements of the disclosed embodiments and other embodiments may be made with respect to the disclosure of this patent document.

## Claims

1. An energy storage system, comprising:
a housing including an opening and an accommodation space disposed therein;
a plurality of battery modules accommodated in the accommodation space;
a door rotatably coupled to the housing and configured to open and close the opening;
a measurement unit configured to derive an environmental value by measuring at least one of temperature, gas concentration, or pressure of the accommodation space in real time; and
a control unit configured to compare the environmental value derived from the measurement unit with a predetermined limit value,
wherein the control unit is configured to open the door when the environmental value is determined to exceed the limit value.

2. The energy storage system of claim 1, wherein, when the environmental value is determined to exceed the limit value, the control unit opens the door after waiting for a predetermined standby time (t).

3. The energy storage system of claim 2,
wherein the battery module includes one or more sub-modules each accommodating a plurality of battery cells, and
wherein the standby time (t) is a time value between a minimum time (t1) taken for a sub-module to burn down and a maximum time (t2) taken for a battery module to burn down.

4. The energy storage system of claim 3, wherein the standby time is a time value between the minimum time taken (t1) for a sub-module to burn down and a maximum time (t3) taken for a sub-module to burn down.

5. The energy storage system of claim 4, wherein the standby time (t) is 60 seconds to 180 seconds.

6. The energy storage system of claim 1, further comprising:
a door lock unit disposed on at least one of the door or the housing and configured to maintain a closed state of the opening of the door,
wherein, when it is determined that the environmental value exceeds the limit value, the control unit transmits an unlock signal to the door lock unit, and
wherein, when an unlock signal is applied, the door lock unit releases the closed state of the door.

7. The energy storage system of claim 6, further comprising:
a door actuator disposed on at least one of the door or the housing and configured to apply force in a direction in which the door opens, and
wherein the door actuator includes a gas spring of which one end and the other end are rotatably disposed on the door and the housing, respectively.

8. The energy storage system of claim 1,
wherein the measurement unit includes at least one of a temperature sensor configured to measure a temperature of the accommodation space, a gas sensor configured to measure a concentration of gas in the accommodation space, or a pressure sensor configured to measure pressure of the accommodation space, and
wherein the environmental value includes at least one of a measured value of the temperature sensor, a measured value of the gas sensor, or a measured value of the pressure sensor.

9. The energy storage system of claim 8, wherein the limit value is a predetermined value corresponding to the environmental value, and includes at least one of a temperature, gas concentration, or pressure of the accommodation space stored in the control unit.

10. The energy storage system of claim 8, wherein the measurement unit is disposed on one surface of the door facing the accommodation space.

11. The energy storage system of claim 10, wherein, among the temperature senser, the gas senser, and the pressure senser, the gas senser is disposed above the temperature senser and the pressure senser with respect to a direction of gravity.

12. The energy storage system of claim 10, further comprising:
a venting unit communicating the accommodation space to an external side and configured to discharge gas from the accommodation space,
wherein, among the temperature sensor, the gas sensor and the pressure sensor, the gas sensor has the shortest distance to the venting unit.

13. The energy storage system of claim 12, wherein the venting unit includes at least one of a first venting unit disposed on upper portion of the housing or a second venting unit disposed on the door.

14. The energy storage system of claim 13,
wherein the venting unit includes the first venting unit and the second venting unit, and
wherein the measurement unit is disposed between the first venting unit and the second venting unit.

15. A control method of an energy storage system comprising a housing with an opening and a door configured to open and close the opening, the housing includes a plurality of battery modules accommodated in an accommodation space thereof, the control method comprising:
a measurement operation of deriving an environmental value by measuring at least one of a temperature, a gas concentration, or pressure of the accommodation space in real time;
an operation of comparing the environmental value with a predetermined limit value and determining whether the environmental value exceeds the limit value; and
an operation of opening the door when it is determined that the environmental value exceeds the limit value.
